# FASCICULE DE BREVET EUROPEEN

(11) **EP 0 410 854 B1**
(45) Date de publication et mention de la délivrance du brevet: **11.08.1993**
(21) Numéro de dépôt: 90402087.2
(22) Date de dépôt: 20.07.1990
(51) Int. Cl.: B60S 1/32

(54) **Déflecteur d'air mobile pour balai d'essuie-glace, notamment de véhicule automobile**
Beweglicher Luftableiter für Scheibenwischerblatt, insbesondere für Kraftfahrzeug
Movable air deflector for window wiper blade, in particular for automobile vehicle

(30) Priorité: 26.07.1989 FR 8910041
(43) Date de publication de la demande: 30.01.1991
(73) Titulaire: VALEO SYSTEMES D'ESSUYAGE, 78180 Montigny-Le-Bretonneux (FR)
(72) Inventeur: Maubray, Daniel, F-92130 Issy-les-Moulineaux (FR)
(74) Mandataire: Gamonal, Didier

(56) Documents cités:
- EP-A- 0 239 201
- DE-A- 3 829 465
- GB-A- 2 145 928

## Description

La présente invention se rapporte à un déflecteur d'air mobile pour balai d'essuie-glace, notamment de véhicules automobiles.

Un balai d'essuie-glace est habituellement constitué par une monture porteuse constituée d'au moins un étrier apte à maintenir une lame d'essuie-glace, généralement en matière à base de caoutchouc.

Il a été constaté que, en fonctionnement et lorsque le véhicule qui porte cet essuie-glace est à grande vitesse, le flux d'air agissant sur le balai d'essuie-glace crée une force tendant à soulever ledit balai et, dans des conditions extrêmes, à lui faire quitter la surface à essuyer en engendrant une mauvaise qualité d'essuyage de ladite surface.

Il a été proposé, notamment dans la demande de brevet français FR-A- 2 513 952 publiée le 8 avril 1983, de prévoir des déflecteurs d'air disposés parallèlement et à distance de la lame d'essuyage, lesdits déflecteurs étant formés ou disposés à partir d'une tringle élastique que porte la lame d'essuie-glace de façon à dévier le flux d'air hors du champ d'action de la lame d'essuie-glace.

Cette dispositition de déflecteurs, bien que résolvant partiellement le problème du flux d'air créant une force de soulèvement, engendre une mauvaise qualité d'essuyage de la lame.

En effet, le déflecteur et la tringle élastique tendent à rigidifier la lame d'essuyage et, dans le cas de surface à essuyer de grande courbure, telle que des pare-brises de véhicules automobiles, ladite lame d'essuie-glace ne peut pas épouser cette courbure et, en fonctionnement, donne en certains endroits du pare-brise, des surfaces non essuyées, ce qui ne peut que gêner la visibilité du conducteur.

En outre, ce type de déflecteur d'air peut, dans le cas où le flux d'air pénètre entre la lame et le déflecteur, entraîner un décollement du balai d'essuie-glace dans son entier et cela par création d'une force de soulèvement sur la face du déflecteur située en vis-à-vis de celle de la lame.

La présente invention se propose de remédier aux inconvénients mentionnés ci-dessus en présentant un déflecteur pour balai d'essuie-glace de conception très simple permettant d'assurer un essuyage correct de la surface.

Selon l'invention, un déflecteur d'air pour dispositif d'essuie-glace constitué de deux éléments, l'un des éléments étant un bras d'essuie-glace portant l'autre des éléments formé par un balai d'essuie-glace se composant d'un monture porteuse d'une lame d'essuie-glace (Déflecteur du type divulgué, par exemple, par FR-A-2 621 288 ou FR-A-2513952) est caractérisé en ce que le déflecteur est porté en au moins deux articulations par l'un des éléments de façon à ce que ce déflecteur puisse se déplacer dans un plan passant par lesdit points d'articulation entre l'élément qui le porte et ledit déflecteur et en ce que le déflecteur comporte des moyens de commande en déplacement à partir de la lame d'essuyage sans toutefois, dans son déplacement, entraîner la lame quelle que soit la courbure de la surface à essuyer.

Grâce à cette disposition, le déflecteur d'air est apte à se déplacer par rapport à l'ensemble formé par la monture et la lame qu'elle porte sans avoir d'incidence sur celui-ci tout en assurant à tout moment, une déviation du flux d'air hors de la lame d'essuyage.

Selon un mode de réalisation de l'invention, les articulations sont des articulations à coopération mutuelle de deux parties.

Selon un mode de réalisation de l'invention, l'une des parties est un axe et l'autre des parties est une ouverture.

Selon un mode de réalisation de l'invention, les articulations servent simultanément de moyens d'accrochage du déflecteur sur un des éléments.

Ainsi le déflecteur peut se mouvoir librement grâce à ces articulations.

Selon un mode de réalisation de l'invention, les articulations sont situées sur des pattes portées par un des éléments.

Selon un mode de réalisation de l'invention, les articulations sont des articulations à translation.

Selon un mode de réalisation de l'invention, les articulations sont constituées d'une lumière oblongue portée par le déflecteur et coopérant avec un pion porté par un des éléments.

Selon un mode de réalisation de l'invention, les articulations sont des articulations à rotation.

Grâce à ces dispositifs, le déflecteur d'air peut, non seulement suivre la courbure de la surface à essuyer, en étant commandé directement par la lame d'essuyage libre de toute entrave, mais aussi permet audit déflecteur, en cas de pénétration du flux d'air entre la lame d'essuyage et le déflecteur lui-même, de pouvoir se déplacer sans entraîner avec lui la lame d'essuyage, en assurant tout de même l'essuyage de la surface.

Les autres caractéristiques et avantages de l'invention ressortiront de la description qui va suivre en se référant aux dessins annexés sur lesquels :
- la figure 1 est une vue frontale montrant le balai d'essuie-glace muni d'un déflecteur suivant l'invention ;
- la figure 2 est une une vue en coupe selon la ligne AA de la figure ;
- la figure 3 est une vue en coupe selon la ligne BB de la figure 1 ;
- la figure 4 illustre une variante de la figure 3 ;
- la figure 5 montre une autre variante du déflecteur selon l'invention ;
- la figure 6 est une vue en coupe partielle selon la ligne CC de la figure 5 ;
- la figure 7 est une vue en coupe partielle selon la ligne DD de la figure 5.

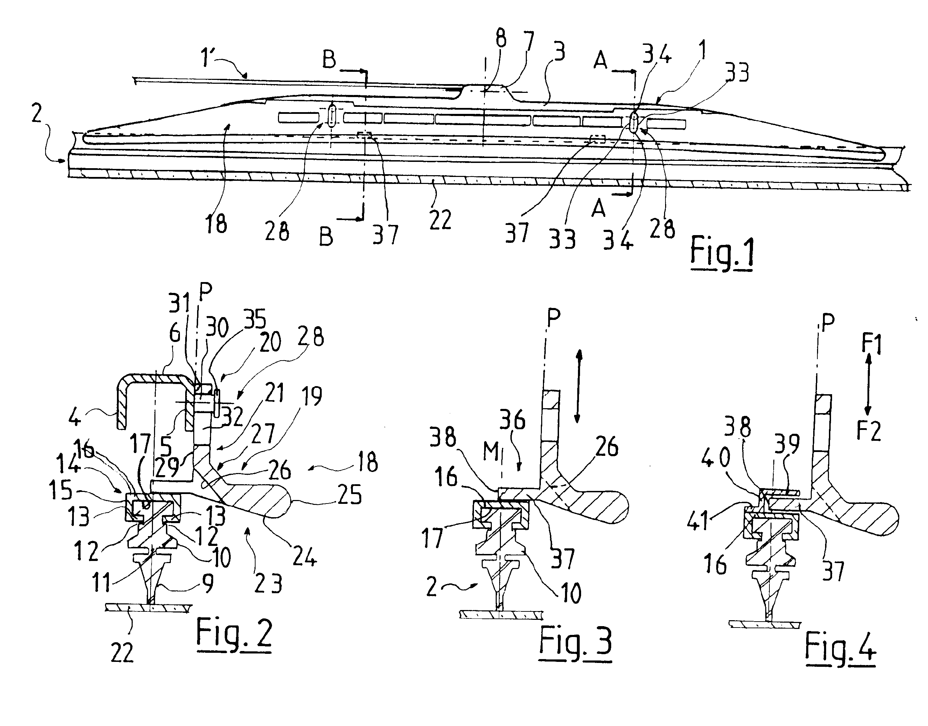

En se référant aux figures 1 et 2, un balai d'essuie-glace comporte une monture porteuse 1 d'une lame d'essuie-glace 2.

La monture porteuse est, ici, constituée d'un étrier principal 3, allongé et légèrement cintré, qui présente une section en U à flancs 4, 5, sensiblement parallèles et perpendiculaires à l'âme 6 du U, comme cela apparaît plus particulièrement sur la figure 2.

Dans sa partie centrale, et de manière connue en soi, l'âme 6 de l'étrier principal 3 présente une ouverture (non représentée) délimitée latéralement par deux ailes 7, sensiblement dans le prolongements des flancs 4 et 5, ces ailes 7 étant reliées entre elles par un axe de pivotement 8.

L'ouverture de la partie centrale et l'axe de pivotement 8 permettent le montage de la monture porteuse sur une partie femelle d'articulation, du type connu, portée par l'extrémité d'un bras d'essuie-glace 1'.

La lame 2, portée par la monture 1, présente une lèvre d'essuyage 9 raccordée à une embase 10 par une zone de charnière 11.

L'embase 10 présente au niveau de sa zone médiane deux rainures longitudinales 12, aptes à recevoir les extrémités de griffes 13 d'une tringle élastique 14. Cette tringle élastique, de section générale rectangulaire creuse, présente deux flancs verticaux 15 portant à l'une de leurs extrémités les griffes 13 et reliées l'une avec l'autre à l'autre de leurs extrémités par un flanc transversal 16 s'appuyant sur le dos 17 de la lame 2, dos situé à l'opposé de la lèvre d'essuyage 9.

Bien entendu, la tringle 14 peut être remplacée, comme connu en soi, par une lame, métallique par exemple, disposée dans chaque rainure 12 et tout au long de celle-ci en laissant libre le dos 17 de la lame 2.

Pour la facilité de la suite de la description, on ne fera mention que d'une lame d'essuyage, celle-ci pouvant porter soit une tringle élastique, soit des lames dans les rainures de l'embase.

Le balai 1 est équipé d'un déflecteur d'air 18 porté dans l'exemple représenté, par ledit balai, mais il peut être envisagé que ledit déflecteur soit porté par le bras d'essuie-glace.

De même, la suite de la description se rapporte à un type particulier de déflecteur d'air mais l'invention peut s'appliquer à tout autre type de déflecteurs.

Le type de déflecteur servant à titre d'exemple à la description de l'invention selon les figures 1 à 4, est décrit plus en détail dans la demande de brevet français FR-A-2 621 288 déposée le 6 octobre 1987 et ne sera décrit ici que dans ses grandes lignes.

En se référant en plus à la figure 2, le déflecteur 18 présente une partie profilée 19, des moyens d'accrochage 20, ici sur la monture porteuse 1, et des moyens de liaison 21 entre la partie profilée 19 et les moyens d'accrochage 20, ces moyens de liaison 21 s'étendant en direction d'une surface à essuyer 22, notamment sur la face d'un pare-brise de véhicule automobile.

La partie profilée 19 a une forme sensiblement convexe tournée vers la surface 22 à essuyer. Cette partie profilée comporte, sur sa surface interne 23, une première zone 24 sensiblement plane inclinée d'un certain angle par rapport à la surface 22 et en s'étendant depuis un bord avant 25 vers l'arrière, c'est-à-dire vers la monture 1, ledit bord 25 ayant une forme arrondie sensiblement semi-cylindrique.

Une seconde zone 26 fait suite à la première 24 en ayant un angle par rapport à la surface à essuyer plus grand que l'angle de la première zone de telle sorte que le profil de la surface interne de la partie profilée 19 soit celui d'un diédre convexe tourné vers la surface 22.

La surface externe 27 de la partie profilée 19 a une forme de diédre concave, l'épaisseur de ladite partie profilée diminuant progressivement du bord avant 25 vers le balai.

Cette partie profilée est disposée à distance de la surface à essuyer 22 comme mieux décrit dans la demande de brevet mentionnée ci-dessus.

Les moyens de liaison 21 sont ici constitués par un voile plein reliant l'extrémité interne de la partie profilée 19 délimitée par la zone 26 aux moyens d'accrochage 20.

Ici, le voile 21 s'étend tout au long de la partie profilée 19 en constituant les moyens d'accrochage 20.

De préférence, la partie profilée 19 et le voile constituant les moyens de liaison 21 sont réalisés en matière plastique et en une seule pièce.

Comme mieux visible sur les figures 1 et 2, le déflecteur 18 est porté, ici sur la monture porteuse 1, en au moins deux articulations 28.

Les points d'articulation 28 servent ici en même temps de moyens d'accrochage dudit déflecteur.

Le déflecteur 18 est monté à articulation à translation de manière à permettre son déplacement dans sa totalité, dans un même plan P passant par une des faces, ici la face arrière 29 du voile 21.

Pour ce faire, l'articulation à translation 28 est constituée d'un pion 30 saillant, ici orthogonalement à partir de la face externe 31 du flanc 5 de l'étrier 3 et d'une ouverture 32 prévue à travers le voile 21 du déflecteur 18.

Cette ouverture 32 est une lumière de forme oblongue à flancs parallèles 33 et à extrémités arrondies 34 et a pour direction la direction souhaitée de déplacement en translation dudit déflecteur, direction pouvant être quelconque et dans le cas considéré de la figure 1, correspond à une direction orthogonale à la surface à essuyer 22.

Le pion 30 comporte à son extrémité libre une tête 35 de plus grand diamètre que la largeur de la lumière 32, qui, elle, est légèrement supérieure au diamètre du pion 30 de façon à autoriser facilement le déplacement du déflecteur 18.

Ainsi le déflecteur 18 est accroché à la monture 1 par emprisonnement de son voile 21 entre la face externe 31 du flanc 5 et la face interne de la tête 35, la distance entre lesdites faces interne et externe étant plus grande que l'épaisseur du voile 21 de manière à autoriser ainsi le mouvement dudit déflecteur.

En se référant en plus à la figure 3, le déflecteur 18 présente des moyens de commande en déplacement 36 dont le rôle sera explicité dans la suite de la description.

Ces moyens de commande en déplacement consistent en au moins un doigt rigide 37 issu de la zone 26 dudit déflecteur, lesdits doigts venant prendre appui sur la lame d'essuyage 2, ici sur la face externe du flanc 16 de la tringle 14 ou comme précédemment mentionné directement sur le dos 17 de l'embase 10 de la lame d'essuie-glace 2.

En pratique, les doigts 37 s'érigent à partir de la zone 26 en étant disposés sensiblement horizontalement et en ayant leur extrémité libre 38 se situant approximativement au-delà du plan médian M de la lame 2.

Il est prévu, sur la figure 1, deux doigts de commande 37, mais un seul doigt de commande suffirait, celui disposé dans la zone située au milieu de la longueur de la lame d'essuie-glace 2.

En pratique, il est prévu que le déflecteur 18 et les doigts 37 soient moulés en une seule pièce.

En se référant à la figue 4, il peut être remarqué que l'extrémité libre 38 du doigt de commande 37 est disposée avec jeu entre la face extérieure du flanc 16 de la tringle 14 et la face intérieure d'une paroi 39, disposée à distance et parallèlement audit flanc.

La paroi 39 est reliée au flanc 16 par un voile 40 porté par une semelle 41 fixée à la face externe du flanc 16, par tous moyens appropriés tels que collage par exemple.

De ce fait le doigt de commande peut être actionné soit par la face externe du flanc 16 dans une premier sens F1 ou par la face interne de la paroi 39 dans un deuxième sens F2.

Cette disposition est particulièrement avantageuse, car elle permet au déflecteur 18 de suivre le balai même si, comme précédemment mentionné, il se crée une force de soulèvement sur la face du déflecteur située en vis-à-vis de la lame d'essuie-glace.

Le rôle et le fonctionnement du déflecteur 18 est explicité à partir de la figure 1, figure montrant l'ensemble balai-déflecteur en appui sur une surface plane 22.

Dans le cas où la surface 22 est une surface à grande courbure, la lame d'essuie-glace va épouser cette courbure en ayant une forme incurvée dans laquelle la zone située dans le milieu de la longueur de la lame va se rapprocher de l'étrier principal 3, alors que les extrémités de ladite lame vont s'éloigner dudit étrier principal.

Pendant ce mouvement, la lame d'essuie-glace 2 agit, ici par son dos 17 de son embase 10 ou par la tringle 14, sur les doigts de commande 37 que porte le déflecteur d'air 18.

Ces doigts vont entraîner le déflecteur 18 en déplacement en translation par glissement le long du plan P de la face interne 29 du voile 21 sur la face externe 31 du flanc 5 de l'étrier 3 tout en étant guidé et lié audit étrier par coulissement de la lumière 32 sur le pion 30, la tête 35 dudit pion empêchant une éventuelle échappée de la lumière 32.

Ainsi le déflecteur est autorisé à avoir un déplacement suivant la direction de la lumière 32 et cela dans les deux sens représentés sur les figures par les flèches F1, F2.

Cette disposition permet ainsi de conserver toujours une distance, considérée au niveau de la zone médiane de la lame 2, entre le bord 25 du déflecteur et la surface à essuyer 22, sensiblement identique et cela quelle que soit la courbure de ladite surface à essuyer.

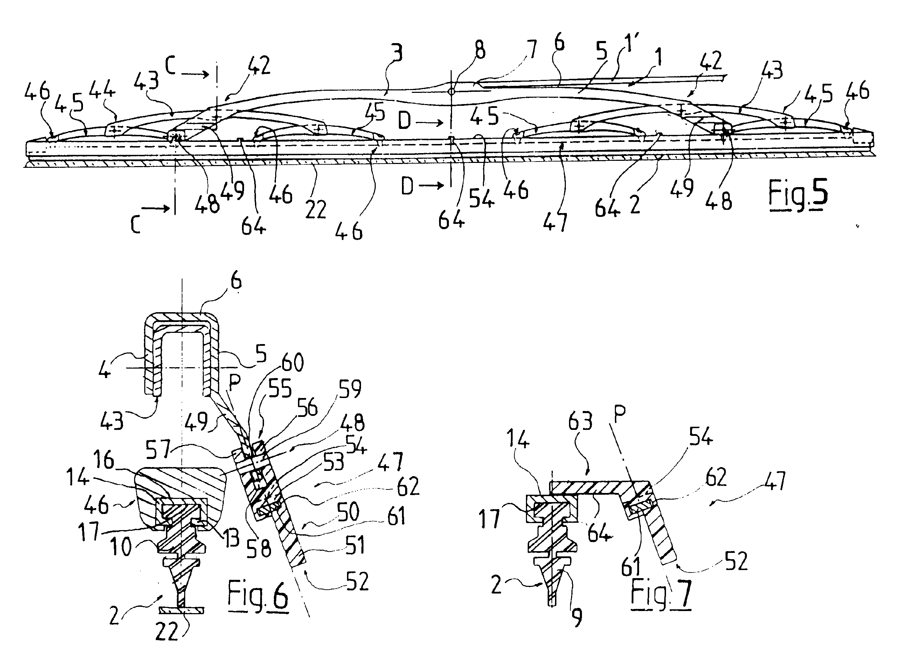

On se réfère maintenant aux figures 5, 6 et 7 montrant une variante du déflecteur selon l'invention.

Dans les exemples représentés, la monture porteuse 1 est constituée d'un étrier principal 3 aux extrémités 42 duquel sont disposés des étriers intermédiaires 43, de forme sensiblement identique à l'étrier principal, c'est-à-dire allongée, cintrée et de section en U.

Ces étriers intermédiaires présentent une section en U de dimension telle, au moins dans leur partie centrale, que cette dernière section est retenue et reçue dans la section du U de l'étrier principal 3 de manière à permettre l'articulation à pivotement de chaque étrier intermédiaire 43 par rapport à l'étrier principal 3, et cela de façon connue en soi.

A chacune de leurs deux extrémités 44, chaque étrier intermédiaire 43, reçoit un étrier secondaire 45, de forme également allongée et cintrée, lesdits étriers secondaires présentant à chacune de leurs extrémités des griffes de pincement 46 pour le maintien de la lame d'essuie-glace 2.

La lame 2 présente la même configuration que celle précédemment décrite et comporte les mêmes références.

Seul diffère le fait que les griffes de pincement 46 ont été représentées et que ces dernières ceinturent la tringle 14 jusqu'au niveau des griffes 13 de ladite tringle.

Sur les dessins, les griffes 46 sont en appui sur la face externe du flanc 16 mais, comme déjà mentionné, il peut être prévu que lesdites griffes prennent appui directement sur le dos 17 de la lame qui dans ce cas comporte des lames dans les rainures 12.

Un déflecteur d'air 47 est disposé au voisinage de la lame d'essuyage 2 en étant de direction parallèle à celle-ci.

Comme mieux visible sur la figure 5, le déflecteur est monté à articulation à rotation sur la monture porteuse 1 en deux points 48.

En pratique, chaque point 48 servant à l'articulation du déflecteur d'air 47, est porté par une patte 49 issue de l'étrier principal 3, et plus particulièrement d'un de ses flancs 5, ladite patte étant dirigée vers la lame d'essuie-glace 2.

En se référant à la figure 6 et pour illustrer le fait que l'invention peut être appliquée à tous types de déflecteur, le déflecteur 47 présente, ici un corps 50, en matière souple déformable, de direction longitudinale sensiblement parallèle à la lame 2 et portant un plan P passant par l'âme moyenne dudit corps et les points d'articulation 48, ledit plan étant incliné d'un angle non nul, ici d'environ 20°, avec le plan général moyen passant par la monture et le balai, ledit corps ayant en section une forme de L disposée tête-bêche par rapport à un L classique, la partie sensiblement verticale du L, ici référencée 51, comporte un bord libre 52 dudit déflecteur alors que la partie sensiblement horizontale du L, ici référencée 53 porte le bord interne 54 du déflecteur d'air 47, ledit bord 54 étant sensiblement parallèle au bord 52 de la partie 51.

C'est à partir de ce bord interne 54 qu'est prévu un élément de liaison 55 avec la patte 49 portée par l'étrier principal 3, afin de créer une articulation à rotation du déflecteur 47 sur lesdites pattes autour des points 48 précédemment définis.

Pour ce faire, l'élément de liaison 55 est constitué de deux parties en saillie 56, 57 s'érigeant à partir du bord interne 54 en direction de l'étrier principal 3 et dans le prolongement transversal de la direction générale du corps 50, lesdites parties 56, 57 étant disposées parallèlement l'une à l'autre et à distance l'une de l'autre en créant un espace libre 58 ouvert à l'extrémité dirigée vers ledit étrier de manière à recevoir l'extrémité libre de la patte 49.

Comme mieux visible sur la figure 6, c'est au niveau de la jonction entre la patte 49 dans l'espace libre 58 entre les deux parties saillantes 56, 57 qu'est réalisée l'articulation à rotation dudit déflecteur.

Pour ce faire, les parties saillantes 56, 57 portent un axe cylindrique d'articulation 59 traversant orthogonalement lesdites parties saillantes et l'espace libre 58, ledit axe d'articulation étant reçu dans une ouverture 60, de dimension radiale plus grande que celle de l'axe d'articulation 59 de manière à autoriser un mouvement relatif dudit axe par rapport à la patte 49. Cette ouverture est prévue au voisinage de l'extrémité libre de la patte 49 tout en étant située dans l'espace libre 58.

En outre, le corps 50 du déflecteur 47 comporte une âme 61, située ici dans la partie 53 précédemment définie. Cette âme 61 a en section une forme de rectangle dont la plus grande dimension est disposée parallèlement au bord interne 54, ladite âme étant montée à jeu dans une ouverture 62 que présente la partie 53, ladite ouverture s'étendant longitudinalement tout au long de la partie 53 de la lame 2.

En se référant à la figure 7, le déflecteur 47 présente également des moyens de commande en déplacement 63.

Ces moyens de commande en déplacement consistent également en au moins un doigt rigide 64 issu du bord interne 54 dudit déflecteur, lesdits doigts venant prendre appui sur la lame d'essuyage 2.

Ainsi, lors de la mise en place du balai 1 muni de son déflecteur 47, la lame 2 va épouser la courbure du pare-brise 22 et exercer une action sur les doigts 64.

Ces doigts vont entraîner le déflecteur en un déplacement tel que le bord 52 dudit déflecteur va s'allonger alors que son bord 53 va se contracter en donnant une configuration courbe du déflecteur par déplacement du corps du déflecteur dans le plan P passant par les deux points d'articulation 48 et par rotation partielle autour desdits points d'articulation.

Ceci est rendu possible par le fait que les doigts 64 sont distincts de la lame 2 et que lesdits doigts peuvent glisser de manière sensiblement horizontale sur le dos de ladite lame.

Cette action sur les doigts 64 va procurer une courbure du déflecteur 47 qui a, en final, la même courbure que la lame 2.

Ceci est réalisé par rotation des axes 59 portés par les parties saillantes 56, 57 liées audit déflecteur dans les ouvertures 60 que portent les pattes 49 de l'étrier principal 3.

De plus, l'âme 61 va jouer un rôle de répartiteur de déplacement, dans le sens que, lors de l'action de la lame 2 sur les doigts 64, ladite âme va se courber en l'endroit desdits doigts en entraînant une répartition uniforme du déplacement du déflecteur entre les deux points d'articulation 48, et, par réaction, entrainer un déplacement en sens inverse de l'extrémité libre dudit déflecteur.

La présente invention n'est pas limitée aux exemples de réalisations décrits mais englobe toutes variantes, pour autant que l'invention reste couverte par la revendication 1.

Notamment, la patte 49 issue de l'étrier principal 3, peut être une partie rapportée apte à être supportée par ledit étrier en étant clipée par exemple sur la surface externe de celui-ci, et cette patte fixe ou amovible pouvant être apte à porter si nécessaire le pion 30 précédemment mentionné.

En outre, il peut être prévu que l'on puisse utiliser les points d'articulation 28, 48 l'un à la suite de l'autre.

Plus précisément, il peut être envisagé qu'à la suite d'un premier mouvement en translation du déflecteur dans son intégralité et si cela est nécessaire, les articulations à translation puissent se transformer en articulations à rotation par butée par exemple des lumières 32 sur les pions 30 de manière à ce que le déflecteur puisse s'articuler à rotation autour des pions 30 qui jouent ainsi le rôle des axes 59 précédemment définis.

## Revendications

1. Déflecteur d'air pour dispositif d'essuie-glace constitué de deux éléments (1,1'), l'un des éléments étant un bras d'essuie-glace (1') portant l'autre des éléments formé par un balai d'essuie-glace se composant d'une monture (1) porteuse d'une lame d'essuie-glace (2), caractérisé en ce que le déflecteur (18,47) est porté en au moins deux articulations (28,48) par l'un des éléments (1,1') de façon à ce que ce déflecteur puisse se déplacer dans un plan (P) passant par lesdits pints d'articulation (28,48) entre l'élément (1,1') qui le porte et ledit déflecteur et en ce que le déflecteur comporte des moyens de commande (36,63) en déplacement à partir de la lame d'essuyage (2) sans toutefois, dans son déplacement, entraîner la lame (2) quelle que soit la courbure de la surface (22) à essuyer.

2. Déflecteur d'air selon la revendication 1, caractérisé en ce que les articulations (28,48) sont des articulations à coopération mutuelle de deux parties (30,32 ; 59,60).

3. Déflecteur d'air selon la revendication 2, caractérisé en ce que l'une des parties est un axe (30,60) et l'autre des parties est une ouverture (32,59).

4. Déflecteur d'air selon l'une des revendications précédentes, caractérisé en ce que les articulations (28,48) servent simultanément de moyens d'accrochage du déflecteur (18,47) sur un des éléments (1,1').

5. Déflecteur d'air selon l'une des revendications précédentes, caractérisé en ce que les articulations (28,48) sont situées sur des pattes (49) portées par un des éléments (1,1').

6. Déflecteur d'air selon l'une des revendications précédentes, caractérisé en ce que les articulations (28) sont des articulations à translation.

7. Déflecteur d'air selon l'une des revendications précédentes, caractérisé en ce que les articulations (28) sont constituées d'une lumière oblongue (32) portée par le déflecteur (18) et coopérant avec un pion (30) porté par un des éléments (1,1').

8. Déflecteur d'air selon l'une des revendications précédentes, caractérisé en ce que les articulations (48) sont des articulations à rotation.

9. Déflecteur d'air selon l'une des revendications précédentes, caractérisé en ce que les articulations (48) sont constituées d'un axe (59) porté par le déflecteur et coopérant avec une ouverture (60) porté par l'un des éléments (1,1').

10. Déflecteur d'air selon la revendication 1, caractérisé en ce que les moyens de commande sont issus du déflecteur d'air (18,47).

11. Déflecteur d'air selon la revendication 10, caractérisé en ce que les moyens de commande sont actionnés par la lame d'essuie-glace (2).

12. Déflecteur d'air selon l'une des revendications 10 à 11, caractérisé en ce que les moyens de commande (36,63) sont actionnés par une paroi (39) portée par la lame (2).

13. Déflecteur d'air selon l'une des revendications 10 à 12, caractérisé en ce que les moyens de commande consistent en au moins un doigt de commande rigide (37,64).

14. Déflecteur d'air selon l'une des revendications précédentes, caractérisé en ce que le déflecteur (18,46) comporte une âme (61) déformable sous l'action des doigts de commande (64).

15. Déflecteur d'air selon la revendication 14, caractérisé en ce que l'âme (61) est placée avec jeu dans une ouverture (62) que présente le déflecteur (47).

## Patentansprüche

1. Luftableiter für Scheibenwischer, bestehend aus zwei Elementen (1, 1'), wobei eines der Elemente ein Scheibenwischerarm (1') ist, der das andere Element trägt, welches aus einer Scheibenwischerleiste gebildet wird, die aus einer Halterung (1) für ein Wischblatt (2) besteht, **dadurch gekennzeichnet,** daß der Ableiter (18, 47) an wenigstens zwei Gelenkstellen (28, 48) auf einem der Elemente (1, 1') so aufliegt, daß sich dieser Ableiter in einer Ebene (P) verschieben kann, die durch die genannten Gelenkstellen (28, 48) zwischen dem tragenden Element (1, 1') und dem genannten Ableiter verläuft, und daß der Ableiter Betätigungsmittel (36, 63) aufweist, wodurch eine Verschiebung ausgehend vom Wischblatt (2) vonstatten geht, ohne bei dieser Verschiebung jedoch das Wischblatt (2) mitzunehmen, ungeachtet der Krümmung der zu reinigenden Fläche (22).

2. Luftableiter nach Anspruch 1, **dadurch gekennzeichnet,** daß die Gelenke (28, 48) gegenseitig mit zwei Teilen (30, 32; 59, 60) zusammenwirken.

3. Luftableiter nach Anspruch 2, **dadurch gekennzeichnet,** daß einer der Teile eine Achse (30, 60) und der andere Teil eine Öffnung (32, 59) ist.

4. Luftableiter nach einem der vorherigen Ansprüche, **dadurch gekennzeichnet,** daß die Gelenke (28, 48) gleichzeitig als Mittel zum Einhaken des Ableiters (18, 47) an einem der Elemente (1, 1') dienen.

5. Luftableiter nach einem der vorherigen Ansprüche, **dadurch gekennzeichnet,** daß die Gelenke (28, 48) an Klammern (49) angebracht sind, die auf einem der Elemente (1, 1') aufliegen.

6. Luftableiter nach einem der vorherigen Ansprüche, **dadurch gekennzeichnet,** daß die Gelenke (28) solche für translatorische Bewegung sind.

7. Luftableiter nach einem der vorherigen Ansprüche, **dadurch gekennzeichnet,** daß die Gelenke (28) aus einem länglichen Schlitz (32) bestehen, der am Ableiter (18) vorgesehen ist und mit einem auf einem der Elemente (1, 1') aufliegenden Stift (30) zusammenwirkt.

8. Luftableiter nach einem der vorherigen Ansprüche, **dadurch gekennzeichnet,** daß es sich bei den Gelenken (48) um Drehgelenke handelt.

9. Luftableiter nach einem der vorherigen Ansprüche, **dadurch gekennzeichnet,** daß die Gelenke (48) aus einer Achse (59) bestehen, die auf dem Ableiter aufliegt und mit einer an einem der Elemente (1, 1') angebrachten Öffnung (60) zusammenwirken.

10. Luftableiter nach Anspruch 1, **dadurch gekennzeichnet,** daß die Betätigungsmittel vom Luftableiter (18, 47) ausgehen.

11. Luftableiter nach Anspruch 10, **dadurch gekennzeichnet,** daß die Betätigungsmittel durch das Wischblatt (2) betätigt werden.

12. Luftableiter nach einem der Ansprüche 10 bis 11, **dadurch gekennzeichnet,** daß die Betätigungsmittel (36, 63) durch eine auf dem Blatt (2) aufliegende Wand (39) betätigt werden.

13. Luftableiter nach einem der Ansprüche 10 bis 12, **dadurch gekennzeichnet,** daß die Betätigungsmittel aus wenigstens einem starren Betätigungsfinger (37, 64) bestehen.

14. Luftableiter nach einem der vorherigen Ansprüche, **dadurch gekennzeichnet,** daß der Ableiter (18, 46) einen Kern (61) besitzt, der unter Einwirkung der Betätigungsfinger (64) verformbar ist.

15. Luftableiter nach Anspruch 14, **dadurch gekennzeichnet,** daß der Kern (61) mit einem Spiel in einer am Ableiter (47) vorgesehenen Öffnung (62) angebracht ist.

## Claims

1. An air deflector for a screen wiper apparatus comprising two elements (1, 1'), one of the elements being a screen wiper arm (1') carrying the other element, which comprises a screen wiper blade that includes a mounting member (1) carrying a screen wiping strip (2), characterised in that the deflector (18, 47) is carried by one of the elements (1, 1') through at least two articulations (28, 48), in such a way that the said deflector can be displaced in a plane (P) passing through the said articulation points (28, 48) between the element (1, 1') that carries it and the said deflector, and in that the deflector includes control means (36, 63), for controlling its displacement in response to the wiping strip (2) but without, in its displacement, displacing the strip (2), whatever the curvature of the surface (22) being swept.

2. An air deflector according to Claim 1, characterised in that the articulations (28, 48) are articulations between two parts (30, 32; 59, 60) in mutual cooperation.

3. An air deflector according to Claim 2, characterised in that one of the parts is a pivot pin (30, 60) and the other of the parts is an aperture (32, 59).

4. An air deflector according to one of the preceding Claims, characterised in that the articulations (28, 48) serve simultaneously as means for attaching the deflector (18, 47) on one of the elements (1, 1').

5. An air deflector according to one of the preceding Claims, characterised in that the articulations (28, 48) are situated on tabs (49) carried by one of the elements (1, 1').

6. An air deflector according to one of the preceding Claims, characterised in that the articulations (28) are articulations for translational movement.

7. An air deflector according to one of the preceding Claims, characterised in that the articulations (28) comprise an oblong slot (32) carried by the deflector (18) and cooperating with a pin (30) carried by one of the elements (1, 1').

8. An air deflector according to one of the preceding Claims, characterised in that the articulations (48) are rotary articulations.

9. An air deflector according to one of the preceding Claims, characterised in that the articulations (48) comprise a pivot pin (59) carried by the deflector and cooperating with an aperture (60) carried by one of the elements (1, 1').

10. An air deflector according to Claim 1, characterised in that the control means project from the air deflector (18, 47).

11. An air deflector according to Claim 10, characterised in that the control means are actuated by the screen wiping strip (2).

12. An air deflector according to Claim 10 or Claim 11, characterised in that the control means (36, 63) are actuated by a wall (39) carried by the strip (2).

13. An air deflector according to one of Claims 10 to 12, characterised in that the control means comprise at least one rigid control finger (37, 64).

14. An air deflector according to one of the preceding Claims, characterised in that the deflector (18, 46) includes a strip (61) which is deformable under the action of the control fingers (64).

15. An air deflector according to Claim 14, characterised in that the strip (61) is located, with a clearance, in an aperture (62) of the deflector (47).
